# EUROPÄISCHE PATENTANMELDUNG

(11) **EP 0 573 379 A2**
(43) Veröffentlichungstag der Anmeldung: **08.12.1993**
(21) Anmeldenummer: 93500024.0
(22) Anmeldetag: 24.02.1993
(51) Int. Cl.: C03C 17/02, C03C 17/00

(54) **Vorgehen zum Schattieren und Satinieren von Flaschen und Glas im Allgemeinen**

(30) Priorität: 26.02.1992 ES 9200426
(71) Anmelder: SOLVI SOLUCIONES DE VIDRIO, S.A., E-08310 Argentona (ES)
(72) Erfinder: Vidal Sole, Juan, E-08310 Argentona, Barcelona (ES)
(74) Vertreter: Zeitler, Giselher, Dipl.-Ing.

(57) **Zusammenfassung**

Die Erfindung besteht in der Satinierung oder Schattierung zum Zweck der Dekoration von Flaschen oder Glasflächen durch die Anwendung von Micromillimetern eines materials das aus folgenden Elementen besteht: keramisches Email, Zellulosenderivate, Zink, Feldspat und Kieselerde. Die Anwendung des Materials geschieht mittels Aspersion oder durch Eintauchen in ein Becken. Vorher wird in einer ersten Eerhitzungsphase ein Erhitzungsproceß auf 300ºc bis 650ºc in einem normalen oder kontinuierlich beschickbaren Ofen durchgeführt.

## Beschreibung

### GECENSTAND DES PATENTES

Es handelt sich bei diesem um ein VORGEHEN ZUM SCHATTIEREN UND SATINIEREN VON FLASCHEN UND GLAS IM ALLGEMEINEN, das zur dekoration duch schattieren oder satinieren von flaschen und glas im allfemeinen dienen soll.

### ANWEMDUNGSBEREICH

Anwendungsbereich dieser erfindung ist die glasindustrie im allgemeinen und ganz besonders jene sektoren, die sich der herstellung von glasgefäsen widmen.

### VORGESCHICHTE DER ERFINDUNG

Der bisher bekannte proceb zur dekoration von glas besteht in der sogenannten schartierung oder satinierung durch saure, deren elemente aus fluorwasserstoffadure abgaleitat werden. Dioeo siuron greifen wogen ihrer eigenschaften die gesanta glasoberfläche an, da die sohattierung oder satinierung durch eine chamisha reaklion auf der glanzenden glasoberflache stattfindet.

Des produkt ist anschliebend in hohem mabe kontaminierend und wird sogar bei behältern benutat, die für dis getränkeabfullung bestimmt sind. Die kosten für die recycling-systeme zur miderung der schädlichen einflüse des ubriggebliebenen materials sing sehr hoch.

### BESCHREIBUNG DER ERFINDUNG

Diese erfindung besteht in einen VORGEHEN ZUM SCHATTIEREN UND SATINIEREN VON FLASCHEN UND GLAS IM ALLGEMEINEN, das den gebrauch von saurem und somit die kontaminierenden folgesrscheinungen vermeidet. Die wesentliche eigenschaft dieses vorgehens besteht in der anwendung von mikromilimetern eines materials, das aus folgenden elementan besthat:keramisches email, zellulosenderivate, zink, feldspat und kiesselerde. Die anwandung Mikromilimeterndierses materials kann neben der schattierung oder satinierung auch zur verschiedenartigen tönung dar flaschen der anderer gläser verwandt werden. Auberdem dindet sine verstärdung des glasmaterials durch das auftragen sines zusätalichen materials statt.

### DETAILLIERTE BESCHREIBUNG DER ERFINDUNG

Diese erfindung besteht aus eimen VORGEHEN ZUM SCHATTIEREN UND SATINIEREN VON FLASCHEN UND GLAS IM ALLFEMEINEN, bei dem flaschen oder glasflachen folgenden arbeituphasen unterzogen werden:
1^{a}.- Zunächts werden flaschen und glasflachen durch flammen oder hitzestrahlung auf sine temperatur zwuischen 80^{º}c und 200^{º}c erhitzt.
2^{a}.- Anchlieebend wird die anwendung von mikrolilimetern des materials aus keramischem email, zellulosenderivaten, zink, feldspat und kieselerde durchgeführt.
   Für die anwendung der mikromilimeter könen sprenger benutzt werden, die flaschen oder glasflachen können nach der ersten erhitzung ober auch in die dementsprechenden becken versenkt werden.
3^{a}.- Zuletzt werden die flaschen oder glasflachen mit dan sufgetragenen mikromilimetern zur verglasung in einen normalen oder kontinuierlich bescnickbaren ofen auf 300^{º}c bie 650^{º}c erhitzt.

Das durch dieses VORGEHEN ZUM SCHATTIEREN VOM FLASCHEN UND GLAS IM ALLGEMEINEN erhaltene produkt is vollkommen frei von der anwendung von säuren und der von ihnen verursachten kontamination. Zusätalich ermöglicht die anwendung der mikromilimeter vorteile wie die verschiedenartige tönung von schattierungen und die verstärkung des materials durch die mikromilimeter des zusätzlichen materials, statt des materalverlusts, der durch die saureanwendung der bis zum gegenwärtigen zeitpunkt bekannten prozesse provoziert wird.

## Patentansprüche

**1**^{**a**}**.-** VORGEHEN ZUM SCHATTIEREN VOM FLASCHEN UND GLAS IM ALLFEMEINEN, das im wesentlichen durch die anwendung folgender phasen für flaschen und glasflachen charakterisiert ist:
2^{a}.- Anwendung von flaschen und glasflachen auf sine temperatur zwuischen 80^{º}c und 200^{º}c durch flammen oder hitzeausstrahlung.
3^{a}.- Erihitzen in einem normalen oder kontinuaierlich beschickbaren ofen zur verglasung bei temperaturen zwischen 300^{º}c und 650^{º}c.

**2**^{**a**}**.-** VORGEHEN ZUM SCHAITIEREN VON FLASCHEN UND GLAS IM ALLGEMEINEN, wie bein ersten eigentumsanspruch insbesondere, weil die mikromilimeter des materials unter anwendung von sprengern durchgeführt wird.

**3**^{**a**}**.-** VORGEHEN ZUM SCHATTIEREN VON FLASCHEN UND GLAS IM ALLGEMEINEN, wie beim ersten eigentumsanspruch insbesondere, weil die mikromilimeter des materials mittels versenkung in beckan durchgeführt wird.

**4**^{**a**}**.-** Shilieblich der eigentumsanspruch auf den gegenstand des gegenwärtigen erfindungspatentes: VORGEHEN ZUM SCHATTIEREN VON FLASCHEN UND GLAS IM ALLGEMEINEN.
